# EUROPÄISCHE PATENTSCHRIFT

(11) **EP 1 036 820 B1**
(45) Veröffentlichungstag und Bekanntmachung des Hinweises auf die Patenterteilung: **30.01.2002**
(21) Anmeldenummer: 00104417.1
(22) Anmeldetag: 02.03.2000
(51) Int. Cl.: C08L 83/04, C08K 5/57

(54) **Lagerstabile, unter Abspaltung von Alkoholen zu Elastomeren vernetzbare Organopolysiloxanmassen**
Storage-stable organopolysiloxane compositions, curable into elastomers by elimination of alcohols
Compositions organopolysiloxanes stables au stockage, réticulables en élastomères par élimination d'alcools

(30) Priorität: 18.03.1999 DE 19912223
(43) Veröffentlichungstag der Anmeldung: 20.09.2000
(73) Patentinhaber: Wacker-Chemie GmbH, 81737 München (DE)
(72) Erfinder: Ziche, Wolfgang, Dr., 84489 Burghausen (DE); Dorsch, Norman, 84489 Burghausen (DE); Straussberger, Susanne, 84561 Mehring (DE); Hechtl, Wolfgang, Dr., 84489 Burghausen (DE)
(74) Vertreter: Fritz, Helmut, Dr.

(56) Entgegenhaltungen:
- EP-A- 0 157 323
- EP-A- 0 857 760
- GB-A- 930 470
- US-A- 4 537 944
- US-A- 4 719 194

## Beschreibung

Die Erfindung betrifft Zinnkatalysator und Tenside enthaltende RTV-1-Alkoxymassen.

Der Begriff Organopolysiloxane soll im Rahmen der vorliegenden Erfindung dimere, oligomere und polymere Siloxane umfassen.

Die Verwendung von Dialkylzinn(IV)verbindungen als Kondensationskatalysatoren in RTV-1-und RTV-2-Siliconkautschuken ist allgemein bekannt. In RTV-1-Alkoxymassen haben diese Zinnverbindungen allerdings den Nachteil, daß sie die unerwünschte Spaltung der Siloxanketten durch Alkoholreste, d.h. die Äquilibrierung ebenfalls katalysieren, wobei nicht mehr vernetzungsfähige Alkoxyendgruppen der Polysiloxankette entstehen und damit eine ausreichende Vernetzung der Masse nicht mehr möglich ist, d.h. daß bei der bestimmungsgemäßen Verwendung kein oder kein ausreichend stabiles Vulkanisat erhalten wird. Die Lagerstabilität, angegeben als Zeitdauer, die die RTV-1-Alkoxymasse gelagert werden kann, ohne ihre Eigenschaften merklich zu verlieren, wird durch die Äquilibrierung drastisch verringert.

Die bekannten Methoden zur Verlängerung der Lagerstabilität sind
- Beispielsweise bekannt aus US-A-3 334 067 ist der Ersatz des Zinnkatalysators durch einen Titan oder Aluminiumchelatkatalysator. Der Nachteil hier besteht in der Gelbfärbung der Massen, wodurch nur gedeckte, aber keine transluzenten Massen möglich sind.
- Beispielsweise bekannt aus EP-A-747 443 ist der Ersatz des Zinnkatalysators durch einen Titankatalysator der allgemeinen Formel Ti(OR)₄, mit dem Nachteil, daß ausschließlich Siloxane verarbeitet werden können, die keine Silanolgruppen enthalten.
   Der Einsatz von Haftvermittlern ist bei solchen Katalysatoren wegen nachteiliger Beeinflussung der Katalysatoraktivität beschränkt.
- Verringerung der Menge des Zinnkatalysators mit dem Nachteil einer sehr langsamen Vulkanisation.
- Beispielsweise bekannt aus US-A-4 517 337 ist die Verwendung weniger aggressiver Zinnkatalysatoren, etwa Zinn-Chelatkatalysatoren. Ein Oberschuß an Chelatverbindung wie z.B. Acetylacetonat ist notwendig; diese ist jedoch flüchtig und toxikologisch bedenklich und gesundheitsgefährdend-und kann zur Vergilbung des Vulkanisats führen.
- Beispielsweise bekannt aus US-A-4 417 042 ist der Zusatz von Alkoholfängern, Scavengern, die sich auf Grund ihrer hohen Reaktivität mit Alkoholen umsetzen. Dieser Zusatz ist allerdings kostenaufwendig und verschlechtert das Haftungsverhalten.

Der Erfindung liegt die Aufgabe zugrunde, Zinnkatalysator enthaltende RTV-1-Alkoxymassen mit erhöhter Lagerstabilität bereitzustellen, welche die Nachteile der bekannten Methoden nicht aufweisen.

Gegenstand der Erfindung sind Zinnkatalysator enthaltende RTV-1-alkoxyfunktionelle Organopolysiloxanmassen (RTV-1-Alkoxymassen), bei denen der Zinnkatalysator ein Umsetzungsprodukt von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesem Umsetzungsprodukt alle Valenzen der Zinnatome durch Sauerstoffatome der Gruppierung ≡SiOSn≡ oder ≡COSn≡ bzw. durch SnC-gebundene, einwertige organische Reste abgesättigt sind, ist,
die Tenside (T) enthalten, welche zweiwertige Polyethereinheiten der allgemeinen Formel (I)

-O-[(CR^{α}R^{β})ᵤ-O]ᵥ- (I),

enthalten, in der
- **R**^{**α**} und **R**^{**β**}: einen Wasserstoff- oder einen einwertigen, gegebenenfalls mit Hydroxyl-, Fluor-, Chlor-, Brom-, C₁-C₁₀-Alkoxyalkyl- oder Cyanogruppen substituierten C₁-C₁₀-Kohlenwasserstoffrest,
- **u**: ganzzahlige Werte von 1 bis 6 und
- **v**: die Werte 3 bis 100 bedeuten,
wobei die RTV-1-Alkoxymassen keine sauren Phosphorsäureester der allgemeinen Formel (II)

(HO)ₐOP(-O-[(CR¹ ₂)_{b}-O]_{c}[(CR² ₂)_{d}]ₑ-L-M ₍₃₋ₐ₎ (II),

in der
- **a**: die Werte 1 oder 2,
- **R**^{**1**} und **R**^{**2**}: einen Wasserstoff-, Methyl- oder Hydroxylrest,
- **b** und **d**: die Werte 2 oder 3,
- **c**: ganzzahlige Werte von 2 bis 15,
- **e**: die Werte 0 oder 1
- **L**: einen Rest aus der Gruppe -O-, -COO-, -OOC-, -CONR³-, -NR⁴CO- und -CO-,
- **R**^{**3**} und **R**^{**4**}: einen Wasserstoff- oder C₁-C₁₀-Alkylrest und
- **M**: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R**^{**1**} und **R**^{**2**} an jedem Kohlenstoffatom nur einmal ein Hydroxylrest sein können, enthalten.

Ebenfalls Gegenstand der Erfindung ist ein Verfahren zur Stabilisierung von Zinnkatalysator enthaltenden RTV-1-alkoxyfunktionelle Organopolysiloxanmassen, bei dem den Massen Tenside (T) zugesetzt werden, welche zweiwertige Polyethereinheiten der allgemeinen Formel (I) gemäß Anspruch 1 enthalten und bei dem der Zinnkatalysator ein Umsetzungsprodukt von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesem Umsetzungsprodukt alle Valenzen der Zinnatome durch Sauerstoffatome der Gruppierung ≡SiOSn≡ oder ≡COSn≡ bzw. durch SnC-gebundene, einwertige organische Reste abgesättigt sind, ist.

Der Zusatz von Tensiden (T) zu Zinnkatalysator enthaltenden RTV-1-Alkoxymassen bewirkt die Phlegmatisierung oder Unterdrückung der äquilibrierenden Wirkung der Zinnkatalysatoren, wodurch die Lagerstabilität drastisch erhöht wird. Gleichzeitig wird die erwünschte Kondensationskatalyse der verwendeten Zinnverbindungen aktiviert. Auch bleiben durch Phosphorsäureester in-situ endblockierte Polysiloxane verarbeitbar.

Vorzugsweise enthalten die Tenside (T) mindestens 20 Gew.-%, insbesondere mindestens 50 Gew.-% zweiwertige Polyethereinheiten der allgemeinen Formel (I).

Vorzugsweise bedeuten in der allgemeinen Formel (I) unabhängig voneinander
- **R**^{α} und **R**^{β}: einen Wasserstoff- oder einen einwertigen, unsubstituierten Kohlenwasserstoffrest, insbesondere Wasserstoff- oder C₁-C₃-Alkylreste, wie Methyl- oder Ethylrest;
- **u**: ganzzahlige Werte von 1 bis 4, insbesondere 2 oder 3; und
- **v**: ganzzahlige Werte von 3 bis 25, insbesondere von 5 bis 10.

Die Tenside (T) können nichtionische, anionische oder kationische Tenside, insbesondere Emulgatoren sein.

Beispiele für Tenside (T) sind:
Fettsäureester, beispielsweise der Formel R'-C(=O)-Y-R",;
Fettalkylethercarboxylate, beispielsweise der Formel R'-Y-CH₂COOX;
Fettalkoholpolyglykolether, beispielsweise der Formel R'-Y-R'';
Phenolpolyglykolether, beispielsweise der Formel Ar-Y-R';
Fettalkylethersulfate, beispielsweise der Formel R'-Y-SO₃X;
Alkyletherphosphate, Polydimethylsiloxan mit Polyethergruppen, Oxethylate und deren Ether, wie z.B. Polyethylenglykol, Polypropylenglykol, Polyethylenglykoldiether, Polypropylenglykoldiether und deren Copolymere, Fettaminoxethylate, Polyglykolsulfonate.

Bei den vorstehenden Tensiden (T) bedeuten
- **R', R"**: C₆-C₃₀-Alkylreste,
- **Y**: eine zweiwertige Polyethereinheit der allgemeinen Formel (I),
- **X**: Na oder K und
- **Ar**: C₆-C₃₀-Arylreste oder C₇-C₃₀-Aralkylreste.

Vorzugsweise enthalten die Zinnkatalysator enthaltenden RTV-1-Alkoxymassen mindestens 0,01, insbesondere mindestens 0,1 Gew.-% und vorzugsweise höchstens 10, insbesondere höchstens 5 Gew.-% Tenside (T).

Die Zinnkatalysator enthaltenden RTV-1-Alkoxymassen enthalten
(A)Alkoxygruppen-terminiertes Organopolysiloxan und
(B)Alkoxysilan, das mindestens drei Alkoxygruppen aufweist und/oder dessen Teilhydrolysate.

Die Alkoxygruppen-terminierten Organopolysiloxane (A) sind vorzugsweise lineare Diorganosiloxane der allgemeinen Formel (III)

R⁵ _{f}(R⁶O)_{3-f}Si-(O-SiR₂)_{g}-O-SiR⁵ _{f}(R⁶O)_{3-f} (III),

worin
- **R, R**^{**5**} **und R**^{**6**}: jeweils einwertige, gegebenenfalls mit Fluor-, Chlor-, Brom-, C₁-C₄-Alkoxyalkyl- oder Cyanogruppen substituierte C₁-C₈-Kohlenwasserstoffreste,
- **f**: die Werte 0 oder 1 und
- **g**: solche Werte bedeutet, die einer Viskosität des Organopolysiloxans (A) von 0,05 bis 1000 Pa.s entsprechen, bedeuten.

Bevorzugt als Reste **R, R**^{**5**} und **R**^{**6**} sind unsubstituierte C₁-C₄-Alkylreste, wobei der Methylrest besonders bevorzugt ist.

Die Organopolysiloxane (A) besitzen vorzugsweise eine Viskosität von 100 bis 700000 mPa.s, insbesondere von 20000 bis 350000 mPa.s, jeweils gemessen bei 23° C.

Vorzugsweise enthalten die Zinnkatalysator enthaltenden RTV-1-Alkoxymassen mindestens 35, insbesondere mindestens 45 Gew.-% und vorzugsweise höchstens 80, insbesondere höchstens 70 Gew.-% Organopolysiloxane (A).

Die Alkoxysilane (B) weisen vorzugsweise die allgemeine Formel (IV)

R⁷ _{µ}Si(OR⁸)_{4-µ} (IV),

auf, worin
- **R**^{**7**} **und R**^{**8**}: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
- **µ**: die Werte 0 oder 1 bedeuten.

Die Teilhydrolysate von Alkoxysilan (B) sind durch Hydrolyse und Kondensation von insbesondere 2 bis 4 Alkoxysilanen entstanden. Teilhydrolysate (B) sind beispielsweise Hexamethoxydisiloxan und Hexaethoxydisiloxan.

Vorzugsweise bedeutet **R**^{**7**} unsubstituierte C₁-C₆-Kohlenwasserstoffreste, insbesondere Methyl-, Ethyl- und Propylreste.

Vorzugsweise bedeutet **R**^{**8**} unsubstituierte C₁-C₆-Kohlenwasserstoffreste, insbesondere Methyl-, Ethyl- Vinyl- und Propylreste.

Vorzugsweise enthalten die Zinnkatalysator enthaltenden RTV-1-Alkoxymassen mindestens 0,5, insbesondere mindestens 2 Gew.-% und vorzugsweise höchstens 8, insbesondere höchstens 6 Gew.-% Alkoxysilan (B) und/oder deren Teilhydrolysat.

Vorzugsweise enthalten die Zinnkatalysator enthaltenden RTV-1-Alkoxymassen mindestens 0,01, insbesondere mindestens 0,1 Gew.-% und vorzugsweise höchstens 3, insbesondere höchstens 1 Gew.-% Zinnkatalysator.

Zusätzlich zu den vorgenannten Komponenten können die Zinnkatalysator enthaltenden RTV-1-Alkoxymassen weitere, an sich bekannte Komponenten enthalten, wie Vernetzer, Füllstoffe, Pigmente, lösliche Farbstoffe, Riechstoffe, Weichmacher, Fungicide, harzartige Organopolysiloxane, einschließlich solcher aus (CH₃)₃SiO_{1/2-} und SiO_{4/2-} Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, zugegeben werden.

Weitere Vernetzer, die zusätzlich zu den Alkoxysilanen (B) in den Zinnkatalysator enthaltenden RTV-1-Alkoxymassen vorhanden sein können, sind Bis(trialkoxysilyl)C₁-C₁₂-alkane, bei denen die Alkoxyreste die Bedeutungen von O**R**^{**8**} aufweisen, beispielsweise Bis(trimethoxysilyl)ethan.

Vorzugsweise enthalten die Zinnkatalysator enthaltenden RTV-1-Alkoxymassen Füllstoffe. Beispiele für Füllstoffe sind nicht verstärkende Füllstoffe, also Füllstoffe mit einer BET-Oberfläche von bis zu 50 m²/g, wie carbonsäurebelegte Kreiden, Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Gras- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststoffasern.

Die genannten Füllstoffe können hydrophobiert sein, beispielsweise durch die Behandlung mit Organosilanen bzw. - siloxanen oder mit Stearinsäure oder durch Veretherung von Hydroxylgruppen zu Alkoxygruppen. Es kann eine Art von Füllstoff, es kann auch ein Gemisch von mindestens zwei Füllstoffen eingesetzt werden.

Bei alleiniger Verwendung von verstärkender Kieselsäure als Füllstoff können transparente RTV-1-Alkoxymassen hergestellt werden.

Vorzugsweise enthalten die Zinnkatalysator enthaltenden RTV-1-Alkoxymassen mindestens 2, insbesondere mindestens 5 Gew.-% und vorzugsweise höchstens 40, insbesondere höchstens 15 Gew.-% Füllstoff.

Als Weichmacher können beispielsweise Alkylaromaten, bei Raumtemperatur flüssige, durch Trimethylsiloxygruppen endblockierte Dimethylpolysiloxane oder Phosphorsäureester eingesetzt werden. Bevorzugte als Weichmacher eingesetzte Dimethylpolysiloxane weisen die allgemeine Formel (V)

R⁹ ₃Si-(O-SiR¹⁰ ₂)ₕ-O-SiR⁹ ₃ (V),

auf, worin
- **R**^{**9**} **und R**^{**10**}: die Bedeutungen von **R** aufweisen und
- **h**: solche Werte bedeutet, die einer Viskosität des Dimethylpolysiloxans von 10 bis 500 mPa.s entsprechen.

Vorzugsweise enthalten die Zinnkatalysator enthaltenden RTV-1-Alkoxymassen mindestens 10, insbesondere mindestens 20 Gew.-% und vorzugsweise höchstens 50, insbesondere höchstens 35 Gew.-% Weichmacher.

Als Haftvermittler können beispielsweise aminoalkylfunktionelle Silane eingesetzt werden. Bevorzugt sind Silane der allgemeinen Formel (VI)

Z-(CH₂)₃-Si(OR¹¹)₃ (VI),

worin
- **Z**: die Bedeutungen NH₂, NH-CH₂CH₂NH₂, NHR und Glycidoxy und
- **R**^{**11**}: die Bedeutung von **R** aufweist

Besonders bevorzugt ist γ-Aminopropyltriethoxysilan.

Vorzugsweise enthalten die Zinnkatalysator enthaltenden RTV-1-Alkoxymassen keinen oder mindestens 1 Gew.-% und vorzugsweise höchstens 4, insbesondere höchstens 3 Gew.-% Haftvermittler.

In den allgemeinen Formeln (I) bis (VI) sind alle Reste **X, Y, Z, R**^{**α**}**, R**^{**β**}**, R, R**^{**1**} bis **R**^{**11**} sowie alle Indizes **a, b, c, d, e, f,** **g, h, m, u, v und µ** unabhängig voneinander gleich oder verschieden.

In allen Formeln gilt die Vierwertigkeit des Siliciumatoms.

Für die Vernetzung der Zinnkatalysator enthaltenden RTV-1-Alkoxymassen reicht der übliche Wassergehalt der Luft aus. Die Vernetzung kann, falls erwünscht, auch bei höheren oder niedrigeren Temperaturen als Raumtemperatur, z.B. bei -5° bis 10° C oder bei 30° bis 50° C durchgeführt werden.

Die Zinnkatalysator enthaltenden RTV-l-Alkoxymassen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau, sowie z.B. zur Herstellung von Schutzüberzügen, oder von gummielastischen Formkörpern sowie für die Isolierung von elektrischen oder elektronischen Vorrichtungen.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25° C. Sofern nicht anders angegeben, werden die nachstehenden Beispiele bei einem Druck der umgebenden Atmosphäre, also bei etwa 1000 hPa, und Raumtemperatur, also bei etwa 20° C, bzw. bei einer Temperatur, die sich beim Zusammengeben der Reaktanden bei Raumtemperatur ohne zusätzliche Heizung oder Kühlung einstellt, durchgeführt.

### Beispiele

Die Lagerstabilität wird anhand der Vulkanisation der RTV-1-Alkoxymassen (= Compounds) zu elastischen Kautschuken als Funktion der Lagerzeit ermittelt. Die Alterung der Compounds wird durch die Lagerung bei 50°C beschleunigt.

### Beispiele 1-4:

In einem Planetenmischer mit Vakuumausrüstung werden unter Wasserausschluß 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit -OSi(CH₃)₃-Endgruppen (Viskosität 100 mPas) und 4,0 Gew.-Teilen Methyltrimethoxysilan, 1,0 Gew.-Teilen Emulgator vermischt. Dann werden 8,0 Gew.-Teile pyrogene Kieselsäure eingemischt, zum Schluß 0,4 Gew.-Teile eines Zinnkatalysators (Umsetzungsprodukt, das aus 4 Teilen Tetraethoxysilan mit 2,2 Teilen Dibutylzinndiacetat hergestellt wurde). Nach Homogenisieren im Vakuum wird der Compound in feuchtigkeitsdichte Gebinde abgefüllt. Die verwendeten Tenside und die Ergebnisse sind in Tabelle 1 aufgeführt.

### Vergleichsbeispiel 5 (nicht erfindungsgemäß) :

Es wird wie unter Beispiel 1-4 vorgegangen, außer daß kein Emulgator zugesetzt wird. Die Ergebnisse sind in Tabelle 1 aufgeführt.

### Tabelle 1

Während die Compounds mit Tensidzusatz vulkanisieren, wird ohne Zusatz kein Kautschuk erhalten. Wird das Vergleichsbeispiel 5 mit der doppelten Menge Katalysator ausgeführt, so ist nach 3 Tagen Lagerung bei RT zumindest eine leichte Anvulkanisation zu finden. Nach 2 Wochen 50°C-Lagerung vulkanisiert der Compound nicht mehr. Diese Beispiele zeigen die Aktivierung der erwünschten Katalysatorwirkung und die Unterdrückung der unerwünschten Äquilibrierung.

**Tabelle 1**

| | Tensid | Vulkanisation nach 3 d RT | Vulkanisation nach 2 Wochen 50°C |
|---|---|---|---|
| Beispiel 1 | Isotridecylalkohol(10)-polyglykolether | gut | ∞ |
| Beispiel 2 | Polymerisat aus Propylen- und Ethylenoxid | gut | Gut |
| Beispiel 3 | Polyglykoletherphosphat | gut | Gut, klebrig |
| Beispiel 4 | Tributylphenolpolyglykolether | Klebrig, weich | Gut, klebrig |
| Vergleichsbeispiel 5 | --- | ∞ | ∞ |
| RT: Raumtemperatur; ∞: keine Vulkanisation. | | | |

### Beispiele 6-9:

In einem Planetenmischer mit Vakuumausrüstung werden unter Wasserausschluß 54,4 Gew.-Teile eines Polydimethylsiloxans mit -OSi(OCH₃)₂(CH₃)-Endgruppen, das eine Viskosität von 80000 mPas besitzt, mit 30,5 Gew.-Teilen eines Polydimethylsiloxans mit -Si(OCH₃)₃-Endgruppen (Viskosität 100 mPas), 4,0 Gew.-Teilen Methyltrimethoxysilan, 1,8 Gew.-Teilen eines 3-Aminopropylgruppenhaltigen Polydimethylsiloxans und 1,0 Gew.-Teilen Emulgator vermischt. Dann werden 7,9 Gew.-Teile pyrogene Kieselsäure eingemischt, zum Schluß 0,4 Gew.-Teile eines Zinnkatalysators (Umsetzungsprodukt, das aus 4 Teilen Tetraethoxysilan mit 2,2 Teilen Dibutylzinndiacetat hergestellt wurde). Nach Homogenisieren im Vakuum wird der Compound in feuchtigkeitsdichte Gebinde abgefüllt. Die verwendeten Tenside und die Hautbildungszeiten (HBZ) sind in Tabelle 2 aufgeführt

### Vergleichsbeispiel 10 (nicht erfindungsgemäß) :

Es wird wie unter Beispiel 6-9 vorgegangen, außer daß kein Emulgator zugesetzt wird. Die Ergebnisse sind in Tabelle 2 aufgeführt.

**Tabelle 2**

| | Tensid | HBZ nach 1 d RT [min] | Vulkanisation nach 1 d RT [min] | HBZ nach 1 Woche 50°C [min] | Vulkanisation nach 1 Woche 50°C [min] |
|---|---|---|---|---|---|
| Beispiel 6 | Isotridecylalkohol(10)-polyglykolether | 20 | Gut | 20 | Gut |
| Beispiel 7 | Polymerisat aus Propylen-und Ethylenoxid | 20 | Gut | 20 | Gut |
| Beispiel 8 | Polyglykoletherphosphat | 20 | Gut | 20 | Gut |
| Beispiel 9 | Tributylphenolpolyglykolether | 20 | Gut | 20 | Gut |
| Vergleichsbeispiel 10 | --- | 20 | Gut | 20 | Brüchig |

Es kann gezeigt werden, daß, obwohl die HBZ für das Vergleichsbeispiel 10 stabil bleibt, die Vulkanisation durch die einsetzende Äquilibrierung gestört ist.

### Beispiel 11:

In einem Planetenmischer mit Vakuumausrüstung werden unter Wasserausschluß 54,0 Gew.-Teile eines Polydimethylsiloxans mit OH-Endgruppen, das eine Viskosität von 80000 mPas besitzt, mit 30 Gew.-Teilen eines Polydimethylsiloxans mit OSi(CH₃)₃₋ Endgruppen (Viskosität 100 mPas) und 4 Gew.-Teilen einer 2:1-Mischung aus Methyltrimethoxysilan und Vinyltrimethoxysilan, 0,8 Gew.-Teilen eines Polyglykolphosphats und 0,2 Gew.-Teilen eines sauren Phosphorsäureesters gemischt. Dann werden 2,2 Gew.-Teile aminopropylgruppenhaltigen Haftvermittlers zugegeben, 8,5 Gew.-Teile pyrogene Kieselsäure, und zum Schluß 0,4 Gew.-Teile eines Zinnkatalysators eingemischt (Umsetzungsprodukt, das aus 4 Teilen Tetraethoxysilan mit 2,2 Teilen Dibutylzinndiacetat hergestellt wurde). Nach Homogenisieren im Vakuum wird der Compound in feuchtigkeitsdichte Gebinde abgefüllt.
Die Hautbildungszeit der beispielgebenden Masse hat einen Ausgangswert von 20 Minuten; dieser Wert bleibt auch nach 28 d/50°C und 56d/50°C unverändert. Der Compound vulkanisiert gut.

### Vergleichsbeispiel 12 (nicht erfindungsgemäß) :

Es wird wie unter Beispiel 11 vorgegangen, außer daß kein Emulgator zugesetzt wird. Die Masse läßt sich nach der Zugabe des 3-aminopropylgruppenhaltigen Haftvermittlers nicht fertig compoundieren, da sie inhomogen und gummiartig wird.

Es wird gezeigt, daß die Verarbeitbarkeit eines in-situ endblockierten Siloxans erhalten bleibt. Gleichzeitig wird die lange Lagerstabilität der RTV-1-Alkoxymasse demonstriert.

## Patentansprüche

1. Zinnkatalysator enthaltende RTV-1-alkoxyfunktionelle Organopolysiloxanmassen,
bei denen der Zinnkatalysator ein Umsetzungsprodukt von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesem Umsetzungsprodukt alle Valenzen der Zinnatome durch Sauerstoffatome der Gruppierung ≡SiOSn≡ oder ≡COSn≡ bzw. durch SnC-gebundene, einwertige organische Reste abgesättigt sind, ist,
die Tenside (T) enthalten, welche zweiwertige Polyethereinheiten der allgemeinen Formel (I)
-O-[(CR^{α}R^{β})ᵤ-O]ᵥ- (I),
enthalten, in der
**R**^{α} und **R**^{β} einen Wasserstoff- oder einen einwertigen, gegebenenfalls mit Hydroxyl-, Fluor-, Chlor-, Brom-, C₁-C₁₀-Alkoxyalkyl- oder Cyanogruppen substituierten C₁-C₁₀-Kohlenwasserstoffrest,
**u** ganzzahlige Werte von 1 bis 6 und
**v** die Werte 3 bis 100 bedeuten,
wobei die RTV-1-Alkoxymassen keine sauren Phosphorsäureester der allgemeinen Formel (II)
(HO)ₐOP(-O-[(CR¹ ₂)_{b}-O]_{c}[(CR² ₂)_{d}]ₑ-L-M) ₍₃₋ₐ₎ (II);
in der
**a** die Werte 1 oder 2,
**R**^{**1**} und **R**^{**2**} einen Wasserstoff-, Methyl- oder Hydroxylrest,
**b** und **d** die Werte 2 oder 3,
**c** ganzzahlige Werte von 2 bis 15,
**e** die Werte 0 oder 1
**L** einen Rest aus der Gruppe -O-, -COO-, -OOC-, -CONR³-, -NR⁴CO- und -CO-,
**R**^{**3**} und **R**^{**4**} einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R**^{**1**} und **R**^{**2**} an jedem Kohlenstoffatom nur einmal ein Hydroxylrest sein können, enthalten.

2. Verfahren zur Stabilisierung von Zinnkatalysator enthaltenden RTV-1-alkoxyfunktionelle Organopolysiloxanmassen, bei dem den Massen Tenside (T) zugesetzt werden, welche zweiwertige Polyethereinheiten der allgemeinen Formel (I) gemäß Anspruch 1 enthalten und bei dem der Zinnkatalysator ein Umsetzungsprodukt von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesem Umsetzungsprodukt alle Valenzen der Zinnatome durch Sauerstoffatome der Gruppierung ≡SiOSn≡ oder ≡COSn≡ bzw. durch SnC-gebundene, einwertige organische Reste abgesättigt sind, ist.

3. RTV-1-alkoxyfunktionelle Organopolysiloxanmassen gemäß Anspruch 1 oder Verfahren gemäß Anspruch 2, bei denen die Tenside (T) mindestens 20 Gew-% zweiwertige Polyethereinheiten der allgemeinen Formel (I) enthalten.

4. RTV-1-alkoxyfunktionelle Organopolysiloxanmassen gemäß Anspruch 1 oder 3 oder Verfahren gemäß Anspruch 2 oder 3, bei denen **R**^{α} und **R**^{β} in der allgemeinen Formel (I) unabhängig voneinander Wasserstoff- oder C₁-C₃-Alkylreste bedeuten.

## Claims

1. RTV-1-alkoxy functional organopolysiloxane compositions (RTV-1-alkoxy compositions) which comprise, in which the tin catalysts is a reaction product of a silane or oligomer thereof, which contains per molecule, as hydrolyzable groups, at least two monovalent hydrocarbon radicals which are bonded to silicon via oxygen and are optionally substituted by an alkoxy group, with a diorganotin diacylate, all the valencies of the tin atoms in these reaction products being satisfied by oxygen atoms of the group ≡SiOSn≡ or ≡COSn≡ or by SnC-bonded, monovalent organic radicals,
and comprise surfactants (S) which contain divalent polyether units of the general formula (I)
-O-[(CR^{α}R^{β})ᵤ-O]ᵥ- (I)
in which
**R**^{α} and **R**^{β} are a hydrogen or a monovalent C₁-C₁₀-hydrocarbon radical which is optionally substituted by hydroxyl, fluorine, chlorine, bromine, C₁-C₁₀-alkoxyalkyl or cyano groups,
**u** is integral values from 1 to 6 and
**v** is the values from 3 to 100,
the RTV-1-alkoxy compositions containing no acid phosphoric acid esters of the general formula (II)
(HO)ₐOP(-O-[(CR¹ ₂)_{b}-O]_{c}[(CR² ₂)_{d}]ₑ-L-M)₍₃₋ₐ₎ (II)
in which
**a** is the values 1 or 2,
**R**^{**1**} and **R**^{**2**} are a hydrogen, methyl or hydroxyl radical,
**b** and **d** are the values 2 or 3,
**c** is integral values from 2 to 15,
**e** is the value 0 or 1,
**L** is a radical from the group consisting of -O-, -COO-, -OOC-, -CONR³-, -NR⁴CO- and -CO-,
**R**^{**3**} and **R**^{**4**} are a hydrogen or C₁-C₁₀-alkyl radical and
**M** is a monovalent C₁- to C₂₀-hydrocarbon radical which is optionally substituted by hydroxyl, fluorine, chlorine, bromine, C₁-C₁₀-alkoxyalkyl or cyano group,
with the proviso that the radicals **R**^{**1**} and **R**^{**2**} on each carbon atom can be a hydroxyl radical in only one instance.

2. Process for stabilizing RTV-1-alkoxy-functional organopolysiloxane compositions comprising a tin catalyst, in which surfactants (S) which contain divalent polyether units of the above general formula (I) according to claim 1 are added to the compositions and in which the tin catalysts is a reaction product of a silane or oligomer thereof, which contains per molecule, as hydrolyzable groups, at least two monovalent hydrocarbon radicals which are bonded to silicon via oxygen and are optionally substituted by an alkoxy group, with a diorganotin diacylate, all the valencies of the tin atoms in these reaction products being satisfied by oxygen atoms of the group ≡SiOSn≡ or ≡COSn≡ or by SnC-bonded, monovalent organic radicals.

3. RTV-1-alkoxy-functional organopolysiloxane compositions according to Claim 1 or process according to Claim 2, in which the surfactants (S) contain at least 20% by weight of divalent polyether units of the general formula (I).

4. RTV-1-alkoxy-functional organopolysiloxane compositions according to Claim 1 or 3 or process according to Claim 2 or 3, in which **R**^{α} and **R**^{β} in the general formula (I) independently of one another are hydrogen or C₁-C₃-alkyl radicals.

## Revendications

1. Masses d'organopolysiloxane à fonctionnalité RTV-1-alcoxy contenant un catalyseur d'étain, dans lesquelles le catalyseur d'étain est un produit de transformation d'un silane présentant par molécule au moins deux radicaux hydrocarbonés monovalents liés par oxygène au silicium, le cas échéant substitués par un groupement alcoxy comme groupements hydrolysables, ou de son oligomère avec du diacylate de diorganoétain, toutes les valences des atomes d'étain dans ce produit de transformation étant saturées par des atomes d'oxygène du groupement ≡SiOSn≡ ou ≡COSn≡ ou, selon le cas, par des radicaux organiques monovalents liés par SnC, qui contiennent des agents tensioactifs (T) qui contiennent des unités polyéther divalentes de formule générale (I)
-O-[(CR^{α}R^{β})ᵤ-O]ᵥ- (I),
dans laquelle R^{α} et R^{β} signifient un radical hydrogène ou un radical hydrocarboné monovalent en C₁ à C₁₀, le cas échéant substitué par des groupements hydroxyle, fluor, chlore, brome, alcoxyalkyle en C₁ à C₁₀ ou cyano,
u signifie des valeurs entières de 1 à 6 et
v signifie des valeurs de 3 à 100, les masses RTV-1-alcoxy ne pouvant pas contenir d'ester acide de l'acide phosphorique de formule générale (II)
(HO)ₐOP(-O-[(CR¹ ₂)_{b}-O]_{c}[(CR² ₂)d]ₑ-L-M)₍₃₋ₐ₎ (II),
dans laquelle
a signifie les valeurs 1 ou 2,
R¹ et R² signifient un radical hydrogène, méthyle ou hydroxyle,
b et d signifient les valeurs 2 ou 3,
c signifie des valeurs entières de 2 à 15,
e signifie les valeurs 0 ou 1,
L signifie un radical du groupe -O-, -COO-, -OOC-, -CONR³-, -NR⁴CO- et -CO-,
R³ et R⁴ signifient un radical hydrogène ou alkyle en C₁ à C₁₀ et
M signifie un radical hydrocarboné monovalent en C₁ à C₂₀, le cas échéant substitué par des groupements hydroxyle, fluor, chlore, brome, alcoxyalkyle en C₁ à C₁₀ ou cyano,
sous réserve que les radicaux R¹ et R² sur chaque atome de carbone ne peuvent être qu'une fois un radical hydroxyle.

2. Procédé pour la stabilisation de masses d'organopolysiloxane à fonctionnalité RTV-1-alcoxy contenant un catalyseur d'étain, dans lequel on ajoute aux masses des agents tensioactifs (T), qui contiennent des unités polyéther divalentes de formule générale (I) selon la revendication 1 et dans lequel le catalyseur d'étain est un produit de transformation d'un silane présentant par molécule au moins deux radicaux hydrocarbonés monovalents liés par oxygène au silicium, le cas échéant substitués par un groupement alcoxy comme groupements hydrolysables, ou de son oligomère avec du diacylate de diorganoétain, toutes les valences des atomes d'étain dans ce produit de transformation étant saturées par des atomes d'oxygène du groupement ≡SiOSn≡ ou ≡COSn≡ ou, selon le cas, par des radicaux organiques monovalents liés par SnC.

3. Masses d'organopolysiloxane à fonctionnalité RTV-1-alcoxy selon la revendication 1 ou procédé selon la revendication 2, où les agents tensioactifs (T) contiennent au moins 20% en poids d'unités polyéther divalentes de formule générale (I).

4. Masses d'organopolysiloxane à fonctionnalité RTV-1-alcoxy selon la revendication 1 ou 3 ou procédé selon la revendication 2 ou 3, où R^{α} et R^{β} dans la formule générale (I) signifient indépendamment l'un de l'autre des radicaux hydrogène ou alkyle en C₁ à C₃.
